# FASCICULE DE BREVET EUROPEEN

(11) **EP 3 909 216 B1**
(45) Date de publication et mention de la délivrance du brevet: **11.03.2026**
(21) Numéro de dépôt: 20700108.2
(22) Date de dépôt: 07.01.2020
(51) Int. Cl.: H04L 9/40, H04W 12/02

(54) **PLATEFORME DE TRANSMISSION SECURISÉE DE DONNÉES PERSONNELLES PERFECTIONNÉE**
VERBESSERTE PLATTFORM ZUR SICHEREN ÜBERTRAGUNG VON PERSÖNLICHEN DATEN
IMPROVED PLATFORM FOR SECURE TRANSMISSION OF PERSONAL DATA

(30) Priorité: 10.01.2019 FR 1900250
(43) Date de publication de la demande: 17.11.2021
(73) Titulaire: M-Itrust, 92100 Boulogne-Billancourt (FR)
(72) Inventeur: DRILHON, Xavier, 92210 Saint-Cloud (FR)
(74) Mandataire: LLR
(86) Numéro de dépôt international: PCT/EP2020/050158
(87) Numéro de publication internationale: WO 2020/144149

(56) Documents cités:
- EP-A1- 1 637 989
- WO-A1-2016/207514
- WO-A1-2018/208455
- FR-A1- 3 041 126

## Description

L'invention concerne le domaine de la transmission de données personnelles et plus particulièrement une plateforme de transmission sécurisée de données personnelles telle que par exemple un état civil, une adresse, un revenu, une date de naissance.

Il existe de plus en plus d'acteurs proposant des services en ligne. Pour accéder à ces services en ligne, il est souvent nécessaire de transmettre des données personnelles ad hoc exigées par le service en ligne, que ce soit pour créer un compte utilisateur auprès du service en ligne ou bien pour réaliser une transaction par la suite.

Un service en ligne peut par exemple être une banque en ligne auprès de laquelle l'utilisateur souhaite ouvrir un compte bancaire, un site de petites annonces sur lequel l'utilisateur souhaite déposer une annonce, ou bien un site de paris en ligne auprès duquel un utilisateur souhaite s'inscrire.

Parfois, le service en ligne demande à l'utilisateur des données personnelles de façon purement déclarative, sans vérifier l'authenticité des données qui sont saisies par l'utilisateur. Le service en ligne se contente alors de données personnelles peu fiables sur l'utilisateur.

Toutefois, lorsqu'il s'agit par exemple d'une banque en ligne ou d'un site de paris en ligne, le service en ligne exige que l'utilisateur fournisse des justificatifs pour attester de la véracité des données transmises. Le service en ligne peut y être contraint parce qu'il est soumis à une réglementation spécifique lui imposant de vérifier certaines données personnelles ou bien parce qu'il a besoin de données fiables pour pouvoir réaliser le service.

Pour attester de la véracité des données personnelles, le procédé habituel est de fournir des documents justificatifs. Il s'agit en général de documents provenant d'un autre fournisseur de service, typiquement un opérateur télécom, une banque, un gouvernement ou encore un fournisseur d'énergie.

En effet, chaque fournisseur de service qui est déjà en relation avec l'utilisateur détient un ensemble pré-formaté de données de l'utilisateur, la fiabilité de ces données pouvant varier en fonction de la nature de la donnée et du fournisseur de service. Le fournisseur de service joue alors le rôle de fournisseur d'un ensemble pré-formaté de données de l'utilisateur, à la fois pour l'utilisateur et pour le service en ligne.

L'ensemble pré-formaté de données de l'utilisateur que détient le fournisseur de données sur l'utilisateur peut prendre la forme de simples données, par exemple le nom, le prénom ou l'adresse de l'utilisateur, mais aussi de documents, par exemple une facture, ou bien un document d'identité.

Dans certains cas, l'utilisateur réalise une copie du document ou le numérise et le transmet de façon non sécurisée, soit par courriel, soit par courrier postal, au service en ligne pour attester de la véracité des données personnelles.

Cela présente, pour l'utilisateur, un risque de vol des données personnelles pouvant conduire à une usurpation d'identité si certaines personnes, malintentionnées, ont accès à ces données.

Par la suite, le service en ligne qui exploite les données récupère le document, et il vérifie alors la nature et l'authenticité du document. En effet, ce dernier pourrait avoir été modifié ou bien falsifié par l'utilisateur pour réaliser une fraude. Enfin, le service en ligne sélectionne sur le document les données ad hoc qu'il souhaite obtenir ou vérifier sur l'utilisateur.

Ce travail de traitement et de vérification des documents transmis par l'utilisateur au service en ligne est réalisé par des opérateurs, ce qui engendre un coût important pour le service en ligne et un long délai traitement.

Les documents transmis par l'utilisateur peuvent avoir été falsifiés par l'utilisateur modifiant ainsi des données personnelles, ou ne plus être à jour, par exemple un relevé bancaire dont le montant des revenus a été frauduleusement modifié ou dont le montant ne correspond plus à la situation présente de l'utilisateur.

Par ailleurs, les documents transmis par l'utilisateur au service en ligne détiennent l'ensemble pré-formaté de données personnelles qui comprend un grand nombre de données personnelles concernant l'utilisateur. Ainsi, l'utilisateur, sans en avoir nécessairement conscience, a transmis de nombreuses informations personnelles que le service en ligne n'exigeait pas et dont il n'a pas besoin pour fournir son service. Ainsi, un utilisateur qui transmet par exemple une copie d'une pièce d'identité, par exemple de sa carte nationale d'identité, pour attester de son nom, prénom et sexe, transmet également sa taille, la couleur de ses yeux et sa date de naissance. L'utilisateur partage ainsi plus de données personnelles que nécessaire, ce qui peut être considéré comme contrevenir à la protection de la vie privée de l'utilisateur.

En outre, certains services en ligne, par exemple un site de rencontre, peuvent conduire à ce que certains de leurs utilisateurs se rencontrent. Il s'agit par exemple des sites d'économie collaborative, qui mettent en relation des particuliers pour échanger des biens ou des services. Même si les utilisateurs de ces sites souhaitent garder leur anonymat, il est important de d'établir une relation de confiance, de sorte à éviter de mettre en relation un utilisateur du service en ligne avec un utilisateur dangereux. Le cas échéant, l'identité de l'utilisateur dangereux doit pouvoir être vérifiée par le service en ligne et transmise aux autorités compétentes en cas de délit. Il est donc important de concilier ce souhait des utilisateurs de rester anonymes, tout en assurant une relation de confiance entre eux.

Il existe quelques solutions connues pour transmettre des données personnelles, telles que facebook connect^{©}, faciles d'utilisation mais dont la sécurité est limitée et présente donc un danger pour les données de l'utilisateur. De plus, l'origine de l'ensemble pré-formaté de données personnelles du fournisseur de données est peu fiable, reposant uniquement sur déclaration de la part de l'utilisateur lors de son inscription. De plus, les données personnelles fournies ne sont pas nécessairement actualisées en temps réel, ainsi, les données transmises au service en ligne ne sont pas nécessairement à jour.

Ainsi, avec ce type de solution, l'identité d'un utilisateur dangereux n'est par exemple pas suffisamment vérifiée à son inscription sur le service en ligne, de sorte qu'il est impossible, le cas échéant, de l'identifier.

Il existe par ailleurs des plateformes plus sécurisées, notamment pour la vérification de documents d'identité, qui fonctionnent avec la prise de photo d'un document d'identité de l'utilisateur. Ces solutions sont plus sûres, notamment lorsqu'une reconnaissance biométrique de l'utilisateur est réalisée, mais ne concernent que les données d'identité et leur parcours est long pour l'utilisateur. Le document WO2018/208455 décrit un procédé de transmission de données d'un utilisateur.

L'invention a notamment pour but de transmettre de façon simple à un service en ligne des données personnelles ad hoc et fiables d'un utilisateur, tout en limitant les données transmises aux seules données nécessaires pour le service en ligne. L'invention est définie par les revendications indépendantes. Les modes de réalisation préférés sont définis par les revendications dépendantes.

A cet effet l'invention a pour objet une plateforme de transmission sécurisée de données personnelles ad hoc d'un utilisateur entre au moins un fournisseur de données, fournissant un ensemble pré-formaté de données de l'utilisateur, et un service en ligne, caractérisée en ce qu'elle comprend :
- une interface utilisateur,
- un module de récupération de données auprès du fournisseur de données, comprenant un module de minimisation de données par sélection d'un sous-ensemble de données pertinentes dans l'ensemble pré-formaté,
- un module de transmission de données ad hoc issues du sous-ensemble de données pertinentes au service en ligne, et
- un module de notation (23) qualifiant un niveau de confiance d'une donnée.

Cela permet de transférer de façon fluide et rapide les seules données ad hoc issues de l'ensemble pré-formaté de données du fournisseur de données vers le service en ligne qui exploite les données ad hoc. Ainsi, un lourd travail de vérification de document et d'extraction de données est évité pour le service en ligne. Pour l'utilisateur, la plateforme permet un gain de temps étant donné qu'il n'a pas à rassembler, ni formater des documents comprenant les données à transmettre au service en ligne qui exploite les données. De plus, la plateforme intervient comme tiers de confiance entre l'utilisateur et le service en ligne. En effet, la plateforme agit comme un acteur distinct du fournisseur de données et le service en ligne destinataire des données, sans que l'utilisateur puisse modifier les données. Par ailleurs, la minimisation des données, par la sélection d'un sous-ensemble de données pertinentes dans l'ensemble pré-formaté, participe à la protection de la vie privée de l'utilisateur. En effet, le fait d'avoir une plateforme indépendante entre l'utilisateur et le service en ligne qui exploite les données permet une anonymisation et/ou le filtre des données personnelles strictement nécessaires au service en ligne, de sorte à transmettre au service en ligne uniquement les données ad hoc.

Concernant le module de notation, il permet de qualifier des données personnelles, c'est-à-dire d'attribuer à une donnée personnelle un niveau de confiance, de sorte que le service en ligne soit informé de la fiabilité des données transmises. En effet, le module de notation réalise une qualification de la donnée personnelle récupérée, notamment en récupérant la donnée personnelle auprès de fournisseurs fiables, qui pour la plupart sont soumis à des exigences réglementaires. Le niveau de confiance est établi en fonction de plusieurs critères, notamment le processus utilisé par la source de données pour valider la fiabilité de la donnée lorsque celle-ci a été enregistrée. Un autre critère pouvant être utilisé est celui de l'identité du fournisseur de données. Ainsi, une source de donnée désignée a priori comme fiable, fournira des données a priori fiables. Le ou les critères utilisés permettent d'attribuer et transmettre au service en ligne un niveau de confiance précis par exemple sur l'identité d'un utilisateur, ou les données transmises, par exemple lors d'un processus de souscription en ligne auprès du service en ligne. Ainsi, il peut ne plus être nécessaire d'utiliser par exemple des documents d'identité ou une identité numérique publique forte pour réaliser la transaction.

La plateforme selon l'invention peut également comporter des caractéristiques suivantes, prises seules ou en combinaison :
- l'interface utilisateur comprend un module de sélection, par l'utilisateur, de données ad hoc à transmettre au service en ligne.

Ainsi, les données récupérées par le module de récupération de données sont affichées sur l'interface utilisateur, et l'utilisateur peut sélectionner les données affichées, ou jeux de données, qu'il souhaite transmettre au fournisseur de service. Par conséquent, l'utilisateur peut sélectionner lui-même les données ad hoc qu'il souhaite transmettre au service en ligne ou du moins visualiser les données transmises au service en ligne. Ainsi, l'utilisateur est assuré que les données transmises sont exactement celles qui lui ont été affichées et sélectionnées par lui-même.
- La plateforme comprend en outre un module de calcul fournissant une donnée dérivée des données pertinentes.

Cela permet de transmettre exclusivement une donnée ad hoc précise souhaitée par le service en ligne, et non pas un ensemble de données permettant d'obtenir la donnée précise. Ainsi, la transmission d'une donnée dérivée à partir de données issues d'un sous-ensemble de données pertinentes provenant d'un ou plusieurs fournisseurs de données à destination d'un service en ligne permet de minimiser davantage des données personnelles de l'utilisateur transmises au fournisseur de service.
- La plateforme comprend en outre un module de gestion du consentement de l'utilisateur pour récupérer les données en son nom auprès du fournisseur de données.

Cela permet de s'assurer que l'utilisateur donne son consentement libre et éclairé pour que la plateforme collecte les données, pour le compte de l'utilisateur, chez un fournisseur de données, conformément aux exigences réglementaires en vigueur, en particulier conformément au Règlement Général sur la Protection des Données. Par ailleurs le module gestion du consentement permet, lorsque l'utilisateur a un compte utilisateur, de pouvoir gérer le consentement de l'utilisateur sur une période de temps défini par l'utilisateur. Ainsi, cela permet, sans action de l'utilisateur, une mise à jour des données personnelles accessibles par la plateforme de façon récurrente, tout en respectant les exigences réglementaires.
- La plateforme comprend en outre un module de stockage de données.

Cela permet notamment au service en ligne de pouvoir remonter aux données stockées, par exemple l'identité d'un utilisateur, uniquement en cas de besoin, par exemple suite à une demande des autorités, sans que ces données ne soient stockées en clair sur un serveur du service en ligne. Par ailleurs, le module de stockage de données permet à la plateforme, lorsque l'utilisateur a un compte utilisateur, de pouvoir stocker sur la plateforme quelques données limitées, permettant de réaliser des parcours et des transferts de données de manière encore plus simple et rapide. La plateforme stocke ainsi des identifiants personnels de l'utilisateur permettant d'établir un accès à un espace client de l'utilisateur chez ses fournisseurs de données ainsi que les données de son identité qui ne sont pas amenées à évoluer. Le module de stockage permet en outre de stocker l'historique du consentement de l'utilisateur pour récupérer et transmettre des données personnelles
- Le module de récupération de données récupère les données par l'intermédiaire d'une interface de programmation applicative.

Ainsi, cela permet d'accéder directement à une base de données du fournisseur de données, à travers l'utilisation une interface de programmation applicative, ou API, qui permet de créer des liens informatiques entre la plateforme et la base de données du fournisseur de données. L'API permet, de façon très rapide de récupérer directement un ensemble pré-formaté de données personnelles sur la base de données du fournisseur de données. Par ailleurs, cela permet de récupérer et transmettre des données personnelles en temps réel, c'est-à-dire transmettre au service en ligne des données personnelles de l'utilisateur à jour.
- Le module de récupération de données récupère les données par extraction des données sur l'espace client de l'utilisateur auprès du fournisseur de données.

Cela permet d'accéder de façon automatisée, c'est-à-dire avec un minimum d'actions manuelles de l'utilisateur, à des données personnelles qualifiées, c'est-à-dire auprès de fournisseurs de données dont les données sont estimées fiables, sur un espace client du fournisseur de données lié à l'utilisateur. De plus, cela permet d'accéder à un ensemble pré-formaté de données personnelles de l'utilisateur, tout en respectant les réglementations en vigueur sur les données personnelles. Par ailleurs, cela permet de récupérer et transmettre des données personnelles en temps réel, c'est-à-dire transmettre au service en ligne des données personnelles de l'utilisateur à jour.
- La plateforme comprend en outre un module de gestion de compte utilisateur.

Cela permet notamment de pouvoir associer un compte à un utilisateur et ainsi permettre d'agréger plusieurs fournisseurs de données à l'utilisateur de sorte à proposer à l'utilisateur un grand choix de données à transmettre de façon simple à un service en ligne, sans que ce dernier ait à ressaisir les identifiants pour s'y connecter.
- La plateforme comprend en outre un module d'authentification à la plateforme.

Le module d'authentification à la plateforme permet, lorsque l'utilisateur a un compte utilisateur, de pouvoir se connecter de façon sécurisée à la plateforme. Cela permet notamment d'établir un accès durable entre un espace client de l'utilisateur chez un fournisseur de données et la plateforme afin que le module de récupération de données, récupère les données demandées par le service en ligne.
- Le module d'authentification est du type authentification forte pour se connecter à la plateforme.

Ainsi, cela permet de s'assurer de l'identité de l'utilisateur de manière fiable lorsqu'il accède à son compte utilisateur, par exemple, lorsque l'utilisateur a un compte et a installé une application mobile, au moyen d'une empreinte digitale de l'utilisateur sur son téléphone mobile.

L'invention concerne également un procédé de transmission sécurisée de données personnelles ad hoc d'un utilisateur entre au moins un fournisseur de données, fournissant un ensemble pré-formaté de données de l'utilisateur, et un service en ligne, comprenant les étapes suivantes :
- on accède, auprès du fournisseur de données, à l'ensemble pré-formaté de données personnelles de l'utilisateur détenue par le fournisseur de données,
- on qualifie un niveau de confiance d'au moins une des données personnelles,
- on minimise l'ensemble pré-formaté de données personnelles en sélectionnant un sous-ensemble de données pertinentes dans l'ensemble pré-formaté de données récupéré,
- on transmet au service en ligne les données ad hoc issues du sous-ensemble de données pertinentes.

### Brève description des figures

L'invention sera mieux comprise à la lecture de la description qui va suivre donnée uniquement à titre d'exemple et faite en se référant au dessin annexé dans lequel :

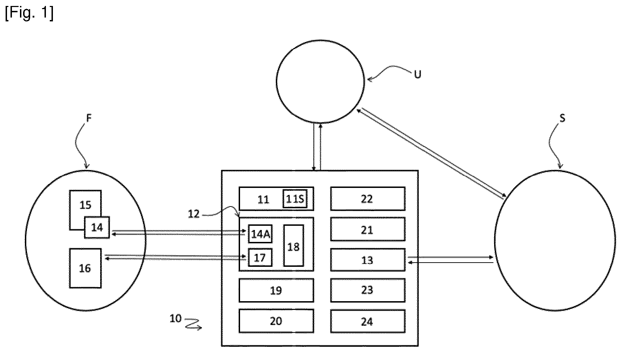

[Fig. 1] est une représentation schématique de la plateforme selon l'invention et des interactions entre l'utilisateur, le fournisseur de données, le service en ligne et la plateforme.

### Description détaillée

On a représenté sur figure 1 une plateforme 10 de transmission sécurisée de données personnelles ad hoc d'un utilisateur U entre un fournisseur de données F, fournissant un ensemble pré-formaté de données personnelles de l'utilisateur U et un service en ligne S, destinataire de données.

On notera que la plateforme 10 peut opérer la transmission sécurisée de données personnelles ad hoc d'un utilisateur U entre plusieurs fournisseurs de données F, et un service en ligne S.

La plateforme 10 comprend une interface utilisateur 11, un module de récupération 12 de données auprès du fournisseur de données F, et un module de transmission 13 de données ad hoc au service en ligne S.

L'interface utilisateur 11 permet à l'utilisateur U d'interagir avec la plateforme 10.

Le module de récupération 12 de données auprès du fournisseur de données F accède à l'ensemble pré-formaté de données personnelles de l'utilisateur U détenues par le fournisseur de données F.

L'utilisateur U choisi, par l'intermédiaire de l'interface utilisateur 11, un fournisseur de données F dont il est client et qui va fournir l'ensemble pré-formaté de données personnelles, par exemple un fournisseur d'énergie, d'eau, ou une banque.

Le module de récupération 12 comprend par ailleurs, dans l'exemple décrit, un sous-module de connexion 14A. Le sous-module de connexion 14A permet au module de récupération 12 de récupérer l'ensemble pré-formaté de données personnelles de l'utilisateur U, par l'intermédiaire, par exemple, d'une interface de programmation applicative 14, ou API, lorsqu'elle a été mise à disposition par le fournisseur de données F. Le module de récupération 12 se connecte à l'interface de programmation applicative 14 par l'intermédiaire du sous-module de connexion 14A à l'interface de programmation applicative 14 du fournisseur F.

Ainsi, le module de récupération 12 accède, par l'intermédiaire du sous-module de connexion 14A, à une base de données 15 du fournisseur de données F, au moyen de l'utilisation de l'interface de programmation applicative 14.

L'interface de programmation applicative 14 crée des liens informatiques entre la plateforme 10 et la base de données 15 du fournisseur de données F. Ainsi, le module de récupération 12 de données récupère de façon très rapide et directement l'ensemble pré-formaté de données personnelles de l'utilisateur U sur la base de données 15 du fournisseur de données F.

En variante, et dans le cas où l'interface de programmation applicative 14 n'a pas été mise à disposition par le fournisseur de données F, le module de récupération 12 récupère l'ensemble pré-formaté de données personnelles de l'utilisateur U, par extraction des données, ou web scraping, d'un espace client 16, ou compte client 16, de l'utilisateur U auprès du fournisseur de données F.

La récupération de l'ensemble pré-formaté de données personnelles provenant de l'espace client 16 de l'utilisateur U auprès du fournisseur de données F est réalisée par exemple au moyen d'un programme, d'un automate ou d'un robot, à qui l'utilisateur U a confié des identifiants personnels pour se connecter à son espace client 16 auprès du fournisseur de données F.

Dans l'exemple décrit, la récupération des données est réalisée au moyen d'un automate 17 qui se connecte de façon informatique à un site web associé au fournisseur de données F, et utilise les identifiants de l'utilisateur U pour se connecter à l'espace client 16. Une fois l'automate 17 connecté à l'espace client 16, l'automate 17 navigue sur les pages web de l'espace client 16, et récupère, au nom de l'utilisateur U, l'ensemble pré-formaté de données personnelles.

L'automate 17 est paramétré de sorte à localiser les données personnelles de l'utilisateur U sur l'espace client 16 du fournisseur de données F lié à l'utilisateur U, par exemple le nom, le prénom et l'adresse, l'âge, les coordonnées téléphoniques de l'utilisateur U. On notera que l'automate 17 est paramétré de façon différente pour chaque espace client 16 de chaque fournisseur de données F.

Le module de récupération 12 comprend en outre un module de minimisation 18 de données.

Le module de minimisation 18 de données sélectionne un sous-ensemble de données pertinentes pour le service en ligne S dans l'ensemble pré-formaté de données récupérées par l'automate 17 ou par l'intermédiaire de l'interface de programmation applicative 14, sous forme de métadonnées, c'est-à-dire sous forme de données formelles normalisées et structurées ou du moins sous forme de données respectant une nomenclature donnée, par exemple : nom, adresse, date de naissance, etc. Le module de minimisation 18 de données identifie les données personnelles ad hoc de l'utilisateur à transmettre au service en ligne S, c'est-à-dire les données demandées par le service en ligne S et nécessaires pour réaliser une transaction avec l'utilisateur U et sélectionne ces seules données dans l'ensemble pré-formaté de données. Ainsi, l'ensemble pré-formaté de données est minimisé en un sous-ensemble de données pertinentes qui sont les seules à être exigées par le service en ligne S, évitant à l'utilisateur de transmettre au service en ligne S des données personnelles qui ne sont pas strictement nécessaires.

Le module de transmission de données 13 transmet au service en ligne S les données ad hoc issues du sous-ensemble de données pertinentes, c'est-à-dire que le module de transmission de données 13 transmet uniquement les seules données exigées par le service en ligne récupérées auprès du fournisseur de données F et vérifiées par l'utilisateur U.

Dans l'exemple décrit, l'interface utilisateur 11 comprend un module de sélection de données 11S. Le module de sélection de données 11S affiche à l'utilisateur U des jeux de données récupérées par le module de récupération 12 et minimisées par le module de minimisation 18. L'utilisateur peut alors sélectionner lui-même les données ad hoc qu'il souhaite transmettre au service en ligne ou du moins visualiser les données susceptibles d'être transmises au service en ligne S. On notera que le module de sélection de données 11S peut afficher plusieurs jeux de données, par exemple si l'utilisateur dispose de plusieurs comptes ou plusieurs contrats chez le fournisseur de données F. Ainsi, on présente à l'utilisateur U les données ad hoc issues du sous-ensemble de données pertinentes. L'utilisateur peut alors sélectionner le jeu de données qu'il souhaite partager avec le service en ligne S, et procéder au partage via le module de transmission 13. Ainsi, en sélectionnant le jeu de données qu'il souhaite transmettre au service en ligne S, l'utilisateur U est assuré que les données transmises au service en ligne S sont exactement les données ad hoc issues du sous-ensemble de données pertinentes qui lui ont été affichées et sélectionnées par lui-même.

Ainsi, l'utilisateur U est assuré qu'aucune donnée personnelle non exigée par le service en ligne pour réaliser une transaction n'est transmise. La plateforme 10 intervient donc, pour l'utilisateur U comme un tiers de confiance.

La plateforme 10 permet notamment de vérifier certains attributs, ou données, concernant l'identité de l'utilisateur U, lors par exemple de son inscription au service en ligne S. A l'aide de la plateforme 10, le service en ligne peut ainsi s'assurer que l'utilisateur U est une personne physique et non un robot, que l'utilisateur U respecte les critères liés notamment à l'âge ou au lieu de résidence pour être autorisé à s'inscrire auprès du service en ligne S.

On notera par ailleurs que les données transmises au service en ligne S proviennent directement de l'ensemble pré-formaté de données personnelles de l'utilisateur provenant du fournisseur de données F, sans qu'aucune possibilité ne soit offerte à l'utilisateur de les modifier. Ainsi, le service en ligne S est garanti que les données transmises via la plateforme 10, proviennent directement et sans modification, d'un fournisseur de données F. La plateforme 10 intervient, pour le fournisseur de données F comme un tiers de confiance, en assurant notamment la source des données.

On notera enfin que, d'une manière générale, les données personnelles de l'utilisateur ne sont pas stockées sur la plateforme 10, mais seulement présentées à l'utilisateur U par l'intermédiaire de l'interface utilisateur 11, de sorte que l'utilisateur U puisse les visualiser, et le cas échéant, les sélectionner par l'intermédiaire du module de module de sélection de donnés 11S.

Dans l'exemple décrit, la plateforme 10 comprend en outre un module de calcul 19.

Le module de calcul 19 réalise des opérations sur les données pertinentes et fournit une donnée dérivée, ou attribut dérivé, dont la valeur est obtenue par une opération arithmétique portant sur les données pertinentes de l'utilisateur U issue de l'ensemble pré-formaté de données.

Le module de calcul 19 peut par exemple réaliser une opération sur des données personnelles pertinentes de l'utilisateur U provenant d'une administration fiscale, pour fournir une donnée dérivée, par exemple l'éligibilité ou non à une subvention ou le quotient familial, sans divulguer les revenus de l'utilisateur U au service en ligne S.

Par ailleurs, dans l'exemple décrit, la plateforme 10 comprend un module de gestion du consentement 20 de l'utilisateur U.

Le module de gestion du consentement 20 recueille le consentement de l'utilisateur U pour récupérer l'ensemble pré-formaté de données personnelles en son nom auprès du fournisseur de données F et le consentement de l'utilisateur U pour fournir ces données personnelles au service en ligne S.

Ainsi, cela assure que l'utilisateur U donne son consentement pour que la plateforme 10 se connecte, au nom de l'utilisateur U, par exemple à l'espace client 16 de l'utilisateur U chez le fournisseur de données F, conformément à des exigences réglementaires.

La plateforme 10 peut en outre comprendre un module de stockage 21 de données.

Le module de stockage 21 de données peut notamment, de préférence sous forme cryptée, stocker l'historique de consentement de l'utilisateur U, notamment le consentement pour récupérer l'ensemble pré-formaté de données personnelles auprès du fournisseur de données F ou pour transmettre les données ad hoc au service en ligne S.

On notera que la plateforme 10, et notamment le module de stockage 21 de données, limite le stockage de données de sorte à protéger les données personnelles de l'utilisateur U. En effet, le module de stockage 21 de données peut conserver seulement une trace pseudonymisée, dit hash, des identifiants de connexion à l'espace client de l'utilisateur U auprès du fournisseur de données F, de sorte à traiter des demandes de l'utilisateur.

Par ailleurs, le module de stockage 21 de données peut stocker une clé de cryptage permettant, notamment en cas de réquisition judiciaire, de déchiffrer des informations d'identité de l'utilisateur U, que le service en ligne S conserve.

La plateforme 10 peut en outre comprendre un module de gestion 22 de compte utilisateur.

Le module de gestion 22 de compte utilisateur permet à un utilisateur U de créer un compte de la plateforme 10. Plusieurs fournisseurs de données F peuvent être agrégés au compte de l'utilisateur U. Le module de récupération 12 de données a ainsi la possibilité d'accéder à différents ensembles pré-formatés de données personnelles de l'utilisateur U issues de différents fournisseurs de données F.

On notera que le compte utilisateur peut être réduit à un compte technique, c'est-à-dire auquel l'utilisateur ne peut accéder que par le biais du service en ligne S.

Le compte de l'utilisateur U sur la plateforme 10 peut notamment permettre à l'utilisateur U de se connecter via un fournisseur de données F, par exemple FranceConnect^{©} qui permet de fournir une donnée d'identité régalienne. Ainsi, l'identité de l'utilisateur U peut être facilement vérifiée et confirmée au service en ligne S, par exemple un site de petites annonces.

Par ailleurs, on notera que, lorsque l'utilisateur U a un compte utilisateur enregistré sur le module de gestion 22 de compte utilisateur, le module de gestion du consentement 20 permet de pouvoir gérer le consentement de l'utilisateur U sur une période de temps définie par l'utilisateur U. Ainsi, cela permet lorsque l'utilisateur confie par exemple ses identifiants d'accès à l'espace client 16 auprès d'un fournisseur de données F, avec le consentement de l'utilisateur et sans action de l'utilisateur U, une mise à jour des données personnelles accessibles par la plateforme 10 de façon récurrente, tout en respectant les exigences réglementaires. On notera que les identifiants de l'utilisateur U d'accès à l'espace client 16 auprès d'un fournisseur de données F peuvent être stockés par le module de stockage, de manière sécurisée, notamment par cryptage. On notera qu'un compte technique accessible uniquement via le service en ligne S est suffisant pour pouvoir définir un consentement sur une période de temps définie par l'utilisateur U.

On notera par ailleurs que le module de stockage 21 de données de la plateforme 10 ne stocke aucune donnée issue de l'ensemble pré-formaté de données personnelles, excepté notamment des données d'identité, et notamment d'identité civile, dans le cas où l'utilisateur a enregistré un compte sur le module de gestion 22 de compte utilisateur.

La plateforme 10 peut en outre comprendre un module de notation 23 qualifiant un niveau de confiance d'une donnée.

Le module de notation 23 qualifie le niveau de confiance des données personnelles de l'utilisateur, c'est-à-dire attribue à une donnée personnelle, et plus particulièrement à une donnée ad hoc, une note, définissant un niveau de confiance sur la donnée récupérée auprès du fournisseur de données F. Ainsi, le service en ligne S estime la fiabilité des données transmises par la plateforme 10.

En effet, le module de notation 23 réalise une qualification des données personnelle récupérées auprès du fournisseur de données F, notamment sur la base du niveau d'authentification de l'utilisateur auprès du fournisseur de données F, du niveau de vérification réalisé par le fournisseur de données F à l'enregistrement de la donnée, du niveau d'authentification de l'utilisateur sur la plateforme 10 ou encore sur la confiance de l'identité de l'utilisateur U. La qualification peut aussi se faire sur la base de l'identité du fournisseur de données F, ou plus généralement sur son activité. Il peut ainsi être prévu « a priori » qu'une certaine source fournit des données particulièrement fiables, tandis qu'une autre source fournit des données moins fiables. Il peut par exemple avoir été identifié préalablement qu'une banque célèbre est une source fiable de données, plus fiable qu'une banque moins connue, laquelle est à son tour plus fiable qu'un site de réservation quelconque. Dans cette variante, la qualification de la fiabilité des données est donc déterminée en fonction de la fiabilité accordée « a priori » au fournisseur de cette ou ces données. Cela peut avoir été déterminé manuellement et fourni par un utilisateur au module de notation, ou cela peut être déterminé par le module de notation.

Bien entendu, la manière de quantifier la fiabilité des données peut prendre en compte plusieurs des critères précités. Dans ce cas, il y a une combinaison de plusieurs niveaux de confiance pour établir un niveau de confiance d'une donnée personnelle.

On notera que le service en ligne S peut exiger de la plateforme 10, que lui soit transmis uniquement des données ad hoc avec un niveau de confiance défini par le service en ligne S. On minimise alors l'ensemble pré-formaté de données personnelles en sélectionnant un sous-ensemble de données pertinentes dans l'ensemble pré-formaté de données récupéré, correspondant au niveau de confiance demandé par le service en ligne S.

Par ailleurs, on notera que, lorsque l'utilisateur a un compte utilisateur géré par le module de gestion 22 de compte utilisateur, et que plusieurs fournisseurs de données F son agrégés à ce compte, par exemple un établissement bancaire, un fournisseur d'énergie, un opérateur téléphonique, le module de notation réalise une correspondance de l'identité de l'utilisateur U auprès de ces différentes sources, le module de notation 23 accorde une plus grande confiance sur l'identité de l'utilisateur U dans la mesure où les données coïncident entre différentes sources de données.

A l'inverse, dans la mesure où les données ne coïncident pas entre différentes sources de données, c'est-à-dire entre les différents fournisseurs de données F, la confiance de l'authenticité et la véracité des données transmises sera plus faible.

Enfin, la plateforme 10 peut comprendre un module d'authentification 24 à la plateforme 10.

Ainsi, l'utilisateur U s'identifie sur la plateforme 10 et accède à son compte utilisateur géré par le module de gestion 22 de compte utilisateur sur la plateforme 10.

On notera que l'authentification peut être réalisée au moyen d'une authentification simple, c'est-à-dire d'un identifiant et d'un mot de passe, ou de préférence au moyen d'une authentification forte, par exemple au moyen de l'utilisation d'une empreinte digitale de l'utilisateur sur son smartphone.

Par ailleurs, on notera que le niveau de confiance, établi par le module de notation 23, de l'authenticité des données, et notamment de l'authenticité de l'identité de l'utilisateur U peut être amélioré en utilisant des moyens d'authentification sécurisés, par exemple en utilisant l'authentification forte pour renforcer le niveau de confiance que la personne qui se connecte est bien l'utilisateur U.

On notera par exemple qu'une donnée personnelle ad hoc d'un utilisateur qui utilise une authentification de type forte pour se connecter au compte utilisateur 16 du fournisseur de donnée F est estimé être plus fiable, c'est-à-dire ayant un niveau de confiance plus élevé que si l'utilisateur s'est connecté au compte utilisateur 16 du fournisseur de donnée F au moyen d'une authentification de type simple.

L'invention n'est pas limitée au mode de réalisation présenté et d'autres modes de réalisation apparaîtront clairement à l'homme du métier. La plateforme 10 n'est notamment pas limitée au partage de données personnelles, mais peut être utilisée pour tout type de données pour lesquelles le destinataire souhaite s'assurer de la fiabilité.

## Revendications

1. Plateforme (10) de transmission sécurisée de données personnelles ad hoc d'un utilisateur (U) entre au moins un fournisseur de données (F), fournissant un ensemble pré-formaté de données personnelles de l'utilisateur (U), et un service en ligne (S), la plateforme comprenant
- une interface utilisateur (11),
- un module de récupération (12) de données auprès du fournisseur de données (F), comprenant un module de minimisation (18) de données par sélection (18) d'un sous-ensemble de données pertinentes dans l'ensemble pré-formaté,
- un module de notation (23) quantifiant la fiabilité d'au moins une des données personnelles récupérée auprès du fournisseur de données en qualifiant un niveau de confiance de la au moins une des données personnelles, de façon à ce que le service en ligne (S) estime la fiabilité des données transmises par la plateforme,
- un module de transmission (13) de données ad hoc issues du sous-ensemble de données pertinentes au service en ligne (S), transmettant au service en ligne uniquement des données ad hoc avec un niveau de confiance demandé par le service en ligne (S) à la plateforme.

2. Plateforme (10) de transmission sécurisée de données personnelles selon la revendication 1, dans laquelle l'interface utilisateur (11) comprend un module (11S) de sélection, par l'utilisateur (U), de données ad hoc à transmettre au service en ligne (S).

3. Plateforme (10) de transmission sécurisée de données personnelles selon la revendication 1 ou 2, comprenant en outre un module de calcul (19) fournissant une donnée dérivée des données pertinentes.

4. Plateforme (10) de transmission sécurisée de données personnelles selon l'une quelconque des revendications précédentes, comprenant en outre un module de gestion du consentement (20) de l'utilisateur (U) pour récupérer les données en son nom auprès du fournisseur de données (F).

5. Plateforme (10) de transmission sécurisée de données personnelles selon l'une quelconque des revendications précédentes, comprenant en outre un module de stockage (21) de données.

6. Plateforme (10) de transmission sécurisée de données personnelles selon l'une quelconque des revendications précédentes, dans laquelle le module de récupération (12) de données récupère les données par l'intermédiaire d'une interface de programmation applicative (14).

7. Plateforme (10) de transmission sécurisée de données personnelles selon l'une quelconque des revendications précédentes, dans laquelle le module de récupération (12) de données récupère les données par extraction (17) des données d'un espace client (16) de l'utilisateur (U) auprès du fournisseur de données (F).

8. Plateforme (10) de transmission sécurisée de données personnelles selon l'une quelconque des revendications précédentes, comprenant en outre un module de gestion (22) de compte utilisateur.

9. Plateforme (10) de transmission sécurisée de données personnelles selon la revendication précédente, comprenant en outre un module d'authentification (24) à la plateforme (10).

10. Plateforme (10) de transmission sécurisée de données personnelles selon la revendication précédente, dans laquelle le module d'authentification (24) est du type à authentification forte pour se connecter à la plateforme (10).

11. Procédé de transmission sécurisée de données personnelles ad hoc d'un utilisateur (U) entre au moins un fournisseur de données (F), fournissant un ensemble pré-formaté de données personnelles de l'utilisateur (U), et un service en ligne (S), comprenant les étapes suivantes, réalisées par une plateforme :
- on récupère, auprès du fournisseur de données (F), l'ensemble pré-formaté de données personnelles de l'utilisateur (U) détenu par le fournisseur de données (F),
- on quantifie la fiabilité d'au moins une des données personnelles en qualifiant un niveau de confiance de la au moins une des données personnelles, de façon à ce que le service en ligne (S) estime la fiabilité des données transmises par la plateforme, - on minimise l'ensemble pré-formaté de données personnelles en sélectionnant un sous-ensemble de données pertinentes dans l'ensemble pré-formaté de données personnelles récupéré,
- on transmet au service en ligne (S) uniquement les données ad hoc avec un niveau de confiance demandé par le service en ligne à la plateforme, issues du sous-ensemble de données pertinentes.

## Patentansprüche

1. Plattform (10) zur sicheren Übertragung von persönlichen Ad-hoc-Daten eines Benutzers (U) zwischen mindestens einem Datenlieferanten (F), der einen vorformatierten Satz persönlicher Daten des Benutzers (U) bereitstellt, und einem Online-Service (S), wobei die Plattform umfasst
- eine Benutzeroberfläche (11),
- ein Modul zur Wiederherstellung (12) von Daten bei dem Datenlieferanten (F), das ein Modul zu Minimierung (18) von Daten durch Auswählen (18) eines Teilsatzes relevanter Daten aus dem vorformatierten Satz umfasst,
- ein Bewertungsmodul (23), das die Zuverlässigkeit mindestens eines Datenelements aus den bei dem Datenlieferanten wiederhergestellten persönlichen Daten quantifiziert, indem es ein Vertrauensniveau des mindestens einen Datenelements aus den persönlichen Daten so qualifiziert, dass der Online-Service (S) die Zuverlässigkeit der durch die Plattform übertragenen Daten abschätzt,
- ein Modul zur Übertragung (13) von Ad-hoc-Daten, die aus dem Teilsatz relevanter Daten stammen, die für den Online-Service (S) relevant sind, das an den Online-Service ausschließlich Ad-hoc-Daten mit einem von dem Online-Service (S) bei der Plattform angeforderten Vertrauensniveau überträgt.

2. Plattform (10) zur sicheren Übertragung von persönlichen Daten nach Anspruch 1, wobei die Benutzeroberfläche (11) ein Modul (11S) zum Auswählen, durch den Benutzer (U), von Ad-hoc-Daten umfasst, die an den Online-Service (S) übertragen werden sollen.

3. Plattform (10) zur sicheren Übertragung von persönlichen Daten nach Anspruch 1 oder 2, ferner umfassend ein Rechenmodul (19), das ein Datenelement bereitstellt, das aus den relevanten Daten abgeleitet ist.

4. Plattform (10) zur sicheren Übertragung von persönlichen Daten nach einem der vorhergehenden Ansprüche, ferner umfassend ein Modul zur Verwaltung der Einwilligung (20) des Benutzers (U) zum Wiederherstellen der Daten in seinem Namen bei dem Datenlieferanten (F).

5. Plattform (10) zur sicheren Übertragung von persönlichen Daten nach einem der vorhergehenden Ansprüche, ferner umfassend ein Modul zur Speicherung (20) von Daten.

6. Plattform (10) zur sicheren Übertragung von persönlichen Daten nach einem der vorhergehenden Ansprüche, wobei das Modul zur Wiederherstellung (12) von Daten die Daten mittels einer Anwendungsprogrammierschnittstelle (14) wiederherstellt.

7. Plattform (10) zur sicheren Übertragung von persönlichen Daten nach einem der vorhergehenden Ansprüche, wobei das Modul zur Wiederherstellung (12) von Daten die Daten durch Extraktion (17) der Daten aus einem Kundenbereich (16) des Benutzers (U) bei dem Datenlieferanten (F) wiederherstellt.

8. Plattform (10) zur sicheren Übertragung von persönlichen Daten nach einem der vorhergehenden Ansprüche, ferner umfassend ein Kundenkontoverwaltungsmodul (22).

9. Plattform (10) zur sicheren Übertragung von persönlichen Daten nach dem vorhergehenden Anspruch, ferner umfassend ein Modul zur Authentifizierung (24) bei der Plattform (10).

10. Plattform (10) zur sicheren Übertragung von persönlichen Daten nach dem vorhergehenden Anspruch, wobei das Modul zur Authentifizierung (24) des starken Authentifizierungstyps für die Anmeldung auf der Plattform (10) ist.

11. Verfahren zur sicheren Übertragung von persönlichen Ad-hoc-Daten eines Benutzers (U) zwischen mindestens einem Datenlieferanten (F), der einen vorformatierten Satz persönlicher Daten des Benutzers (U) bereitstellt, und einem Online-Service (S), umfassend die folgenden, durch eine Plattform realisierten Schritte:
- Wiederherstellen, bei dem Datenlieferanten (F), des vorformatierten Satzes persönlicher Daten des Benutzers (U), der von dem Datenlieferanten (F) vorgehalten wird,
- Quantifizieren der Zuverlässigkeit mindestens eines Datenelements aus den persönlichen Daten, indem ein Vertrauensniveau des mindestens einen Datenelements aus den persönlichen Daten so qualifiziert wird, dass der Online-Service (S) die Zuverlässigkeit der durch die Plattform übertragenen Daten abschätzt,
- Minimieren des vorformatierten Satzes persönlicher Daten des Benutzers, indem ein Teilsatz relevanter Daten aus dem wiederhergestellten vorformatierten Satz persönlicher Daten ausgewählt wird,
- Übertragen an den Online-Service (S) ausschließlich der Ad-hoc-Daten mit einem von dem Online-Service bei der Plattform angeforderten Vertrauensniveau, die aus dem Teilsatz relevanter Daten stammen.

## Claims

1. Platform (10) for secure transmission of ad hoc personal data of a user (U) between at least one data supplier (F), supplying a pre-formatted set of personal data of the user (U), and an online service (S), the platform comprising:
- a user interface (11),
- a module (12) for retrieving data from the data supplier (F), comprising a module (18) for minimising data by selecting (18) a subset of relevant data in the pre-formatted set,
- a scoring module (23) quantifying the reliability of at least one item of personal data retrieved from the data supplier by qualifying a confidence level of the at least one item of personal data, so that the online service (S) can estimate the reliability of the data transmitted by the platform,
- a module (13) for transmitting ad hoc data from the subset of relevant data to the online service (S), transmitting to the online service only ad hoc data with a requested confidence level defined by the online service (S) to the platform.

2. Platform (10) for secure transmission of personal data according to claim 1, wherein the user interface (11) comprises a module (11S) allowing the user (U) to select ad hoc data to be transmitted to the online service (S).

3. Platform (10) for secure transmission of personal data according to claim 1 or 2, further comprising a calculation module (19) supplying a data item derived from the relevant data.

4. Platform (10) for secure transmission of personal data according to any one of the preceding claims, further comprising a module for managing the consent (20) of the user (U) to retrieve the data in their name from the data supplier (F).

5. Platform (10) for secure transmission of personal data according to any one of the preceding claims, further comprising a data storage module (21).

6. Platform (10) for secure transmission of personal data according to any one of the preceding claims, wherein the data retrieval module (12) retrieves the data via an application programming interface (14).

7. Platform (10) for secure transmission of personal data according to any one of the preceding claims, wherein the data retrieval module (12) retrieves the data by extracting (17) data from a customer space (16) of the user (U) from the data supplier (F).

8. Platform (10) for secure transmission of personal data according to any one of the preceding claims, further comprising a user account management module (22).

9. Platform (10) for secure transmission of personal data according to the preceding claim, further comprising a platform (10) authentication module (24).

10. Platform (10) for secure transmission of personal data according to the preceding claim, wherein the authentication module (24) is of the strong authentication type to log on to the platform (10).

11. Method for secure transmission of ad hoc personal data of a user (U) between at least one data supplier (F), supplying a pre-formatted set of personal data of the user (U), and an online service (S), comprising the following steps performed by a platform:
- retrieving, from the data supplier (F), the pre-formatted set of personal data of the user (U) held by the data supplier (F),
- quantifying the reliability of at least one item of personal data by qualifying a confidence level of the at least one item of personal data, so that the online service (S) can estimate the reliability of the data transmitted by the platform,
- minimising the pre-formatted set of personal data by selecting a subset of relevant data in the pre-formatted set of personal data retrieved;
- transmitting to the online service (S) only the ad hoc data with a confidence level requested by the online service to the platform, from the subset of relevant data.
